Europäisches Patentamt

European Patent Office

Office européen des brevets

(11) Publication number: **0 160 540**
**B1**

# EUROPEAN PATENT SPECIFICATION

(45) Date of publication of patent specification: **13.12.89**

(21) Application number: **85302964.3**

(22) Date of filing: **26.04.85**

(51) Int. Cl.⁴: **G 03 B 42/02**

(54) Radiographic apparatus.

(30) Priority: **28.04.84 JP 87008/84**
**14.05.84 JP 97954/84**

(43) Date of publication of application:
**06.11.85 Bulletin 85/45**

(45) Publication of the grant of the patent:
**13.12.89 Bulletin 89/50**

(84) Designated Contracting States:
**DE FR GB NL**

(56) References cited:
**EP-A-0 077 676**
**DE-A-2 256 793**
**FR-A-2 092 914**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Fujiwara, Shigemi c/o Patent Division**
**Toshiba Corporation Principal Office**
**1-1 Shibaura 1-chome Minato-ku Tokyo (JP)**
Inventor: **Koyama, Katsuhide c/o Patent**
**Division**
**Toshiba Corporation Principal Office**
**1-1 Shibaura 1-chome Minato-ku Tokyo (JP)**
Inventor: **Kageyama, Hiroshi c/o Patent Division**
**Toshiba Corporation Principal Office**
**1-1 Shibaura 1-chome Minato-ku Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

EP 0 160 540 B1

## Description

The present invention relates to radiographic apparatus which employs stimulable phosphor sheets.

When certain kinds of phosphors are exposed to radiation, such as X-rays, α-rays, β-rays, γ-rays, or ultra violet rays, they store a part of the energy of the radiation. Then, when the phosphor which has been exposed to the radiation is exposed to a stimulating ray, such as visible ray, light is emitted from the phosphor in the pattern of the stored energy of the radiation. A phosphor exhibiting such properties is referred to as a stimulable phosphor.

Radiographic apparatus adapted especially for using stimulable phosphors is described in U.S. Patent No. 4236078, entitled "METHOD AND APPARATUS FOR RECORDING AND REPRODUCING A RADIATION IMAGE". This patent discloses a method and apparatus of radiation image recording and reproducing which employs a radiation image storage panel including a stimulable phosphor for medical diagnosis. The stimulable phosphor is first exposed to radiation to have a radiation image stored therein and is then scanned with a stimulating ray which causes it to emit light in the pattern of the stored image. The light emitted from the stimulable phosphor upon stimulation thereof is photoelectrically detected and converted to an electric signal which is processed as desired to reproduce a visible image of a quality suitable for viewing and diagnostic purposes.

In the radiation image recording and reproducing method described above, the final visible image may be reproduced in the form of a hard copy or may be displayed on a cathode ray tube. The stimulable phosphor sheet used in this method may take various forms, such as a panel, a drum or the like, which are herein generally referred to as imaging plate (IP). For reasons of economy, it is desirable that the IP be used repeatedly in many separate radiographic operations, say, 1,000 operations.

In serial radiography, a series of radiographs are produced by sequentially feeding a series of IPs, one at a time, to an exposure station. The exposure station is aligned with a source of X-rays which directs a beam of X-rays through the exposure station for exposing the IPs.

European Patent Application EP—A—77676 discloses a radiographic apparatus in which a stack of IPs is stored in a supply magazine. A transport and drive system transports each IP from the supply magazine to the exposure station at high speed, After exposure, each IP is transported to, and deposited in, a receiving magazine. The transport and drive system concurrently delivers an unexposed IP to the exposure station and an exposed IP to the receiving magazine.

An imaging device to take serial radiographs on the IPs at high speed is called a spot shot apparatus. The spot shot apparatus presents an IP at an exposure station in the path of radiation emission from a radiation source carried in the table body which supports a patient in a selected horizontal, vertical or inclined attitude during the taking of radiographs. In the spot shot apparatus, the transfer of the IPs from the supply magazine to the receiving magazine through the exposure station is effected by a transport system and a movable carriage which will position one IP for exposure.

Such a transport system should be compact, transport IPs at high rates with accuracy, and to avoid any possibility of an IP being scratched or otherwise damaged during transport or exposure to assure that a timely exposure will accurately record an event of short duration.

Especially, damage to the phosphor layer of the stimulable phosphor sheet (IP) is a severe problem for the radiographic system as above described. The destruction of image data due to damage to the IP is highly undesirable in the radiographic system.

An object of the present invention is to provide radiographic apparatus having an IP feed mechanism for drawing the stimulable phosphor sheets one by one out of a supply magazine and forwarding it to a transport system with minimum damage to the phosphor layer of the IP.

According to the present invention, there is provided radiographic apparatus comprising a supply magazine adapted to contain a stack of stimulable phosphor sheets; a transport system for transporting the sheets serially from the supply magazine to an exposure position and then to a receiving magazine; take-up and feeding means including suction means for taking up the sheets one at a time from the supply magazine; and a sheet advance means for feeding the taken-up sheets to the transport system and characterised in that corrugation means acts in combination with the take-up means and feeding means to corrugate the taken-up sheets.

In order that the invention may be more readily understood, it will now be described, by way of example only, with reference to the accompanying drawings, in which:-

Figure 1 is a schematic diagram of a radiographic system;

Figure 2 is a diagrammatic side view of a spot shot apparatus for stimulable phosphor sheets;

Figure 3 is a partial view showing a shot carriage and the guide arrangement employed in the apparatus shown in Figure 2;

Figure 4 is a schematic diagram of the contol system for the apparatus;

Figures 5a and 5b are perspective views of a take-up mechanism of the apparatus;

Figures 6a to 6c are cross-sectional views showing the operation of the take-up mechanism;

Figure 7 is a partial perspective view showing the relationship of the carrying rollers and the phosphor sheet in the transport and drive system shown in Figure 2;

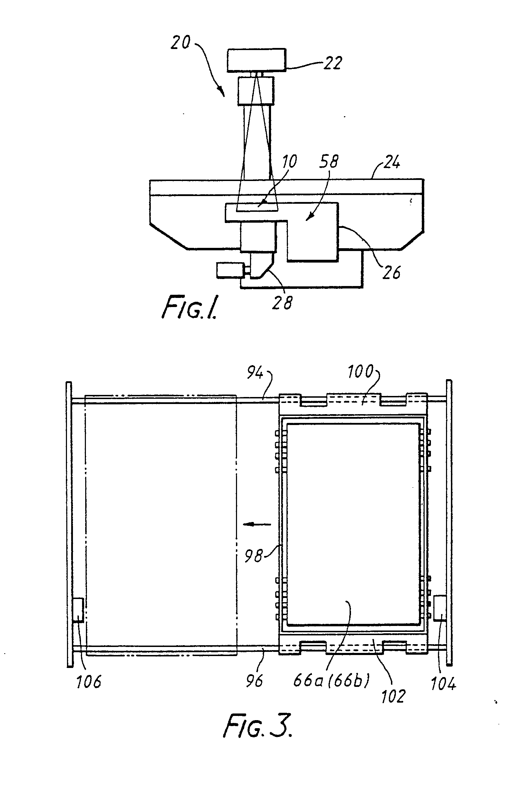

Referring now to the drawings, wherein like reference numerals designate identical or corresponding parts throughout the several views, and more particularly to Figure 1 thereof, the general arrangements of a serial radiographic system 20 constructed in accordance with the present invention includes an X-ray tube 22 which directs an X-ray beam towards a patient (not shown) disposed on the patient table 24, a spot shot apparatus 26 including a transport and drive system for receiving X-rays from the tube 22, which is positioned under the table 24, and an image intensification tube 28 coupled to a display apparatus (not shown) for providing a fluoroscopic image of the patient. Because the image tube 28 underlies the exposure station 10 in the spot shot apparatus 26 for taking radiographs on the stimulable sheets, it is able to provide unobstructed fluoroscopy without interferring with the radiographic procedure.

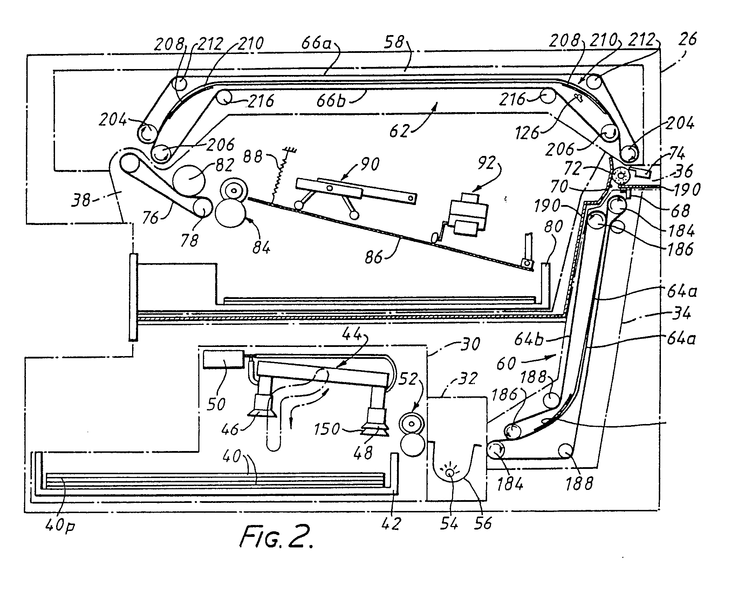

Referring now to FIG. 2, the spot shot apparatus 26 is seen to include a supply system 30 for unexposed stimulable phosphor sheets 40, a second noise erasing apparatus 32, a transport system 34, a light-tight mechanism 36, and a receiving system 38 for exposed stimulable phosphor sheets 40 transported by the transport system 34.

The supply system 30 includes a supply magazine 42 to be removed from the supply system 30 to enable convenient loading of unexposed stimulable phosphor sheets 40 (hereinafter referred to as IPs) in a darkroom, an IP feed mechanism 44 including take-up arms 46, 48 for taking-up the IPs one by one from the supply magazine 42 by suction of a vacuum pump 50, and carrying rollers 52 for forwarding an unexposed IP 40 to the transport channel of the transport system 34. The IPs 40 are suction lifted and taken-up one at a time by the take-up arms 46, 48, which apply suction to the side of the IP opposite the phosphor layer side of IP 40. The taken-up sheet 40 is moved to the transport system 34 by the carrying rollers 52.

The second noise erasing apparatus 32 (hereinafter referred to as the erasing apparatus) includes a lamp 54, for example, a tungsten filament, fluorescent, sodium, xenon or iodine lamp, and a reflector 56 shaped and disposed so that IP 40 is exposed uniformly and widely by the light of the lamp 54. Thereby, the efficiency of exposure to light of the lamp 54 for IP 40 is increased. The erasing apparatus 32 is synchronized with the movement of IP 40 so that it emits light when the forward end of the taken-up IP 40 reaches the carrying rollers 52. The IP 40 is exposed to light when it is passed over the erasing apparatus 32 at a predetermined speed by the carrying rollers 52.

A transport system 34 is provided in spot shot apparatus 26. During an operating cycle the transport system 34 concurrently transports an unexposed IP 40 from the supply magazine 42 to a preexposure station 58 close to the exposure station 10 in part defined by the X-ray tube 22, and an exposed IP 40 from the preexposure station 58 to the receiving system 38. The transport system 34 has two continuous band portions 60, 62. One portion 60 transports the IP 40 from the carrying roller 52 to the light-tight portion 36; the other 62 transports the IP 40 from the light-tight portion 36 through the exposure station 58 to the receiving system 38. The portions 60, 62 each include respective pairs of continuous band loops 64a, 64b, and 66a, 66b, which run around roller wheels in a path. The IP 40 is transported in the transport channel defined by these band loops (64a, 64b), (66a, 66b) while being held between two facing band loops (64a, 64b) or (66a, 66b). The IP 40 is transported by the transport system 34 and stopped at the position where the IP 40 contacts the position detector 68 disposed in the forward end thereof. The IP 40 stays at this position during a predetermined period without being transported to the second portion 62 of the transport system 34.

The light-tight mechanism 36 includes a guide plate 70 for the IP 40, a light-tight roller 72 for forwarding the IP 40 with the guide 70, and a defect detector implemented 74 by suitable means. These components are arranged to prevent light from the erasing lamp 54 entering into the darkroom.

The second portion 62 of the transport system 34 includes a top band loop 66a and a bottom band loop 66b which can be moved in the direction perpendicular to the path of the band loops 66a, 66b. Thus, an unexposed IP 40 is moved by the loops 66a, 66b to a preexposure or park position, and then the entire assembly of the loops 66a, 66b with the unexposed IP is moved laterally to a station 10 shown in FIG. 1 where the X-ray beam from the source 22 passes through an adjacent patient. Movement of the IP 40 into the exposure station 10 is carried out after the IP 40 is advanced to a precise position on the band loops 66a, 66b, for example, a central portion of the second transport portion 62. If a defective IP 40 is detected by the defect detector 74, it will be transported directly to the receiving system 38 without being moved into the exposure station 10.

The receiving system 38 includes a drive belt 76 riding in the belt pulleys 78 for feeding and depositing the exposed IP 40 in the receiving magazine 80. A combination of a follower roll 82 and an ejector roll 84 are provided for gripping the exposed IP 40 and feeding it into the receiving magazine 80. The receiving magazine 80 for receiving the exposed IP 40 is mounted on tracks (not shown) to facilitate removal to a darkroom for loading and unloading of the exposed IP 40. A spring-biased press pad 86 is arranged downstream in the feeding path behind the ejector rolls 84. This press pad 86 is pivotable about an axis at one end of the pad 66 and is urged by spring 88 perpendicular to the direction of the IP feeding. A suitable pressure mechanism 90 pushes against the press pad 86 to load the exposed IPs 40 uniformly in the receiving magazine 80. A barcode reader 92 is provided for reading the identification of IP 40 and providing electrical signals corresponding thereto.

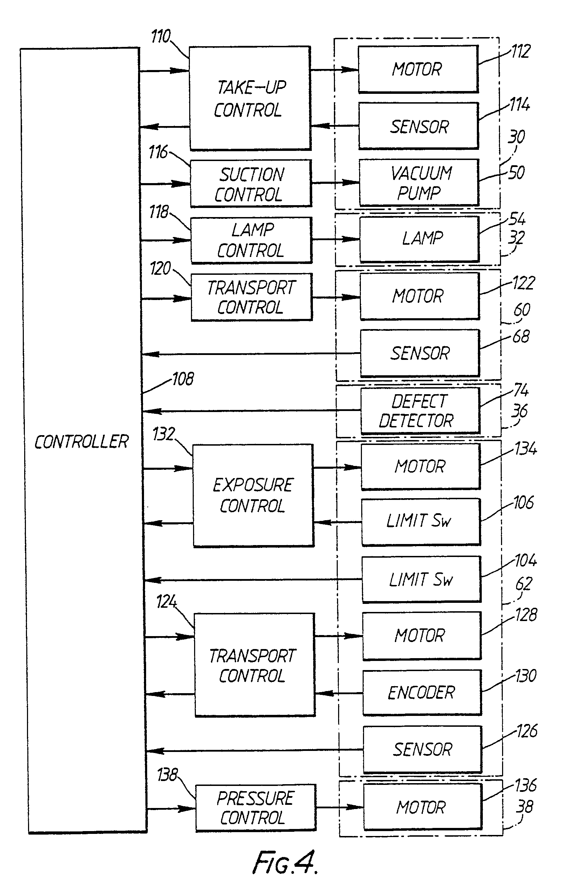

As shown in FIG. 3, the band loops 66a, 66b with the unexposed IP 40 are moved to an exposure position 10 under the X-ray source 22 from the parked position (preexposure station 58) along parallel guide rods 94, 96. The band loops 66a, 66b are supported by a carriage 98 having slide portions 100, 102 which slide on the guide rods 94, 96. Position detectors 104, 106 are disposed for detecting the movement of the carriage 98 in the path from the parked position 58 to the exposure position 10.

In operation, a supply magazine 42 which had previously been loaded in a dark room with a plurality of the IPs 40 is inserted in the housing of the spot shot apparatus 26. An empty receiving magazine 80 is also inserted into the housing structure. The controller is programmed for the beginning of a feed cycle which feeds the selected IP 40 along the transport channel from the supply magazine 42 through the exposure station 10 to the receiving magazine 80.

Referring to the schematic diagram of the control system which controls the feed cycle shown in FIG 4, to initiate a feed cycle, the take-up control mechanism 110 is actuated causing the transport system 34 to initate feeding. The take-up arms 46, 48 operate to take-up the uppermost IP 40 in the supply magazine 42 and forward it to the carrying rollers 52 under control ofthe take-up control mechanism 110 for driving a reversible motor 112 responsive to the output signal of a position sensor 114 monitoring the positions of the arms 46, 48. A suction control mechanism 116 controls the actuation of the vacuum pump 50. A lamp control mechanism 118 conditions the light beam from the lamp 54 in the erasing apparatus 32. The taken-up IP 40 is fed past the erasing apparatus 32 to the transport system 34 from the carrying rollers 52. A transport control mechanism 120 conditions the actuation of motor 122 synchronized with the drive of the carrying rollers 52 responsive to the output signal of a position sensor 68 which monitors the arrival of the IP 40 at the forward end of the first band portion 60 within the transport system 34. After a predetermined time period, the motor 122 supplies a high speed drive to advance the IP 40 to the second band portion 62 within the transport system 34. The second transport control mechanism 124 for the pair of continuous band loops 66a, 66b in the portion 62 of the transport system 34 conditions the actuation of motor 128 to position the IP 40 in the predetermined preexposure position 58 in the path responsive to both the output signal of the position sensor 126 and the output signal of the rotary encoder 130. The position sensor 126 is disposed in the feed path for monitoring the arrival of the IP 40 at the front end of the second band loops 66a, 66b. The rotary encoder 130 monitors the rotational position of the shaft of motor 128. After that, the carriage 98 supporting the second band loops 66a, 66b is moved horizontally to the exposure station 10 to take a radiograph, and returned to the preexposure station 58. This motion of the carriage 98 is monitored by the limit switch 104 providing an output signal whenever the carriage 98 moves to the preexposure station 58. The second transport control mechanism 124 also drives a motor 128 to forward any IP 40 which is found to be defective by the detector 74 to the receiving system 38 without being advanced to the exposure station 10. Under control of an exposure control mechanism 132, the carriage 98 holding the second band loops 66a, 66b is moved from the parked position 58 to the exposure position 10 by motor 134. This motion of the carriage 98 is synchronized with the timing of the exposure of X-ray source 22 operated by an operator. The X-rays from the X-ray source 22 are directed to the patient after the carriage 98 is found to arrive at the exposure position by the limit switch 106, as shown in FIG. 3.

After the radiograph has been taken on the IP 40, the exposed IP 40 is transported to the receiving system 38 under control of the second transport control mechanism 124. The IP 40 transported from the second band loops 66a, 66b is further fed to the receiving magazine 80 by the drive belt 76 and drive rolls 84. In the receiving system 38, a pressure control mechanism 138 controls a reversible motor 136 for driving the pressure mechanism 90 which supplies the pivotable motion to the press pad 86. The pressure, control mechanism 138 controls the movement nipping drive rolls 84 to allow the smooth rotation of the press pad 86 without contacting with each other, and controls the scanning of the bar code reader system 92.

The supply system 30 is shown in detail in FIGS. 2, 5a — 5b, 6a — 6c and 7. The supply magazine 42 includes a housing having a floor, sides, a front and a back. A stack of IPs 40 is stored in the supply magazine 42. Each IP 40 is loaded with the phosphor layer thereof facing the floor of the supply magazine 42. The IP feed mechanism 44 is arranged above the supply magazine 42 to take out an unexposed IP 40 from the supply magazine 42, and forwardly transfer the unexposed IP 40 to the carrying rollers 52.

The IP feed mechanism 44 includes a support structure 140 having paired vacuum suction devices 142 and 144 provided at the free end of take-up arms 46 and paired vacuum suction devices 146 and 148 provided at the free end of take-up arms 48 for drawing IPs 40 out of the supply magazine 42 by using a vacuum effect, and a corrugate arm 150 having a vacuum suction device 152, a holder 154 for the vacuum suction device 152, and a bias spring 156 disposed between the support structure 140 and the holder 154. These vacuum suction devices 142, 144, 146, 148 and 152 are connected to the vacuum pumps 50. The paired vacuum suction devices 142, 144 and vacuum suction device 152 of the corrugation arm 150 are disposed near the carrying rollers 52 above the take-out opening of the supply magazine 42 to hold the front edge portion of IP 40, and the paired vacuum suction devices 146, 148 are disposed rearward to hold the middle portion of IP 40. The vacuum suction device 152 of the corrugation arm 150 sticks out with respect to the vacuum suction device 142 and 144. The support structure 140 is mounted on an axle 158 which engages the opposed guide grooves 160, shown schematically via a pair of bearings 162, it being understood that the grooves 160 are provided in opposed plates (not shown). The axle 15 is coupled to a pair of metal links 164 which are pivotally connected to a pair of metal links 66 rigidly mounted to an axle 168. A drive motor 112 has a motor output shaft which carries a motor sprocket 169. A drive chain 170 rides in the sprocket 168. The sprocket 172 mounted on an end of the axle 168 is driven by the chain 170. As viewed in FIG. 2, these vacuum suction devices 142, 144, 146, 148 and 152 are moved to approach the uppermost IP 40 in the supply magazine 42 according to the guide grooves 160 and then are returned to the uppermost position defined by the guide grooves 160 by the motor 112 under, control of the take-up control mechanism 110.

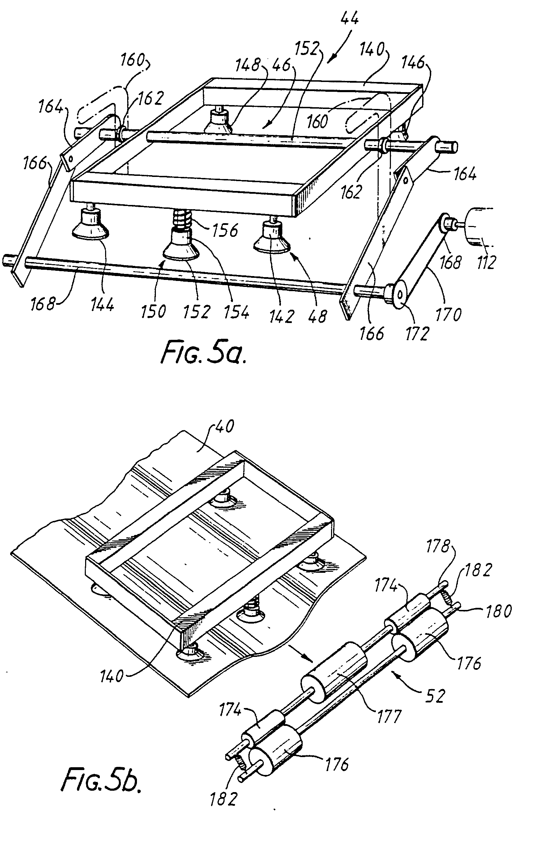

As shown in Fig. 5b, the carrying roller unit 52 is composed of drive rolls 174 paired with respective follower rolls 176, and a large diameter corrugation roll 177. The paired drive rolls 174 are mounted on a upper shaft 178, the paired follower rolls 176 are mounted on a lower shaft 180, and the corrugation roll 177 is mounted on the shaft 178 and is disposed between the paired drive rolls 174. An IP 40 is fed with the edge portions thereof passed through the respective paired drive rolls and follower rolls. The paired springs 182 are stretched between the extended portion of the shaft 178 of the drive rolls 174 and the extended portion of the shaft 180 of the follower rolls 176 so as to press the drive rolls 174 resiliently against the follower rolls 176.

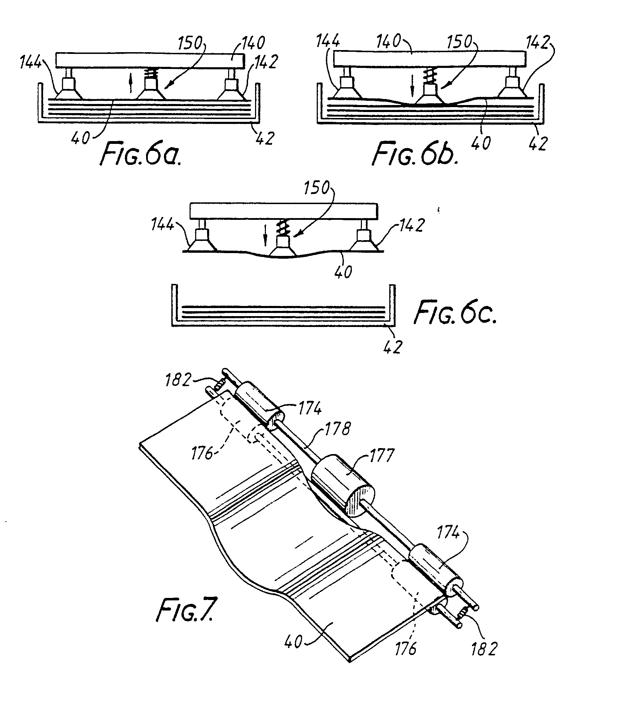

Operation of the IP feed mechanism 44 is as follows. The motor 112 rotates at operating speed in a forward direction, and the sprocket 172 causes the axle 168 to rotate. The support structure 140 is moved downwardly in close vicinity to the stack of IPs 40 in the supply magazine 42 according to the guide grooves 160 via the paired links 164 and 164 and the axle 158. The corrugation vacuum suction device 152 contacts with the uppermost IP 40 of the stack of IP, and contacts the surface of the IP substrate, the fluorescent layer being provided on the side opposite to the side contacted by the suction device 152. After the contact of the corrugation vacuum suction device 152 with the IP 40, all the vacuum suction devices 142, 144, 146 and 148 contact with the surface of the substrate of IP 40 as shown in FIG. 6a. The suction devices draw a single IP 40 out of the take-out opening by using the vacuum effect of the vacuum pump 50. After that, the motor 112 rotates in a reverse direction to cause the support structure 140 to return upwardly guided by the guide grooves 160. The corrugation vacuum suction device 152 is biased downwardly by the spring 156 via the supporter 154, thereby the IP 40 corrugates in the traverse direction thereof as shown in FIG. 6b. The corrugation of IP 40 takes place over the whole of the IP by holding of the vacuum suction devices 146 and 148 on the central portion of the IP 40. The IP 40 is taken up rigidly, and carried to the carrying rolls unit 52 because the section modulus effect of IP 40 is so increased by the corrugation as to avoid bending of IP 40 in a direction towards the supply magazine. As seen in FIG. 6c, the complete area of IP 40 is lifted simultaneously by the support structure 140 without touching the other IPs 40 of the stack stored in the supply magazine 42 with the traverse edge thereof. As a result, damage to the fluorescent layer of IP 40 caused by frictional dragging contact with the next adjacent IP 40 is avoided, the separation between the uppermost IP 40 and the next adjacent one is completed by the air gap made by the corrugation of IP. Further electrical coupling between IPs 40 is eliminated, whereby a plurality of IPs 40 are not transferred to the carrying rolls unit 52 at one time.

When the drawn IP 40 touches the nipping rolls 174 and 176, the IP 40 strikes between the drive rolls 174 and the follower rolls 176 and is fed to the transport system 34, as shown in FIG. 7. The surface of the substrate of IP 40 is sucked by the vacuum suction devices, and pressed by the drive rolls 174 to be transported, whereby there is no possibility of damage to the fluorescent layer of IP 40 caused by frictional contact of the fluorescent layer. It is to be noted that the fluorescent layer, which faces downward as shown in Figs. 5b and 7, makes contact with the follower rolls 176, thereby avoiding frictional slippage, and possible damage to the fluorescent layer of the IP. In addition, the corrugation roll 177 is between the drive rolls 174 in the carrying rolls unit 52 to corrugate the IP 40 during its passage through the carrying rolls unit 52 again to avoid vertical bending of the IP, which would result in frictional dragging of the IP. Accordingly firmness of IP 40 over the complete area thereof is maintained so that the IP 40 is fed to pass over the erasing apparatus 32, and strike the transport system 34 without frictional contacting of the fluorescent layer of the IP.

The erasing apparatus 32 is disposed as shown in FIG. 2 to erase undesirable radiation energy stored in the IP 40 which causes noise to appear in the visible radiation image reproduced from a reused IP. The erasing apparatus 32 includes a lamp 54, a reflector 56 and power supplier (not shown) which is an AC source to supply power to maintain the power load of the lamp 54 constant using a feed-back control.

System Operation

The unexposed IP 40 is loaded in the supply magazine so that the side opposite to the fluorescent layer of the IP 40 faces upward. The vacuum suction devices 46 and 48 draw the uppermost IP 40 of the stack out of the magazine 42 one by one by suction applied to the side opposite to the fluorescent layer side of the IP 40. The drawn IP 40 passes over the erasing apparatus 32 to erase undesirable radiation energy stored in the IP 40 by emitting a light beam to the fluorescent layer of the IP 40. The IP 40 fed from the erasing apparatus 32 is advanced to strike the paired band loops 64a and 64b and turned upside down by being fed through the transport channel. When the IP 40 reaches the position sensor 68 disposed at the forward end of the first band portion 60 of the transport system 34, the IP 40 fed through the band loops 64a and 64b is stopped for a predetermined time period before being forwarded to the second band portion 62 of the transport system 34. After the period has passed, the IP 40 is fed through the light-tight roller assembly 36 to the second discrete, independent driving band portion 62 of the transport system 34.

The IP 40 fed from the light-tight roller assembly 36 is forwarded in the second transport channel formed by the paired band loops 66a and 66b and is turned with the fluorescent layer facing upward by being fed through the arc portion 210 arranged in the feed path. The position sensor 126 monitors the position of feeding of the unexposed IP 40, and the IP 40 is held in position to take a radiograph on the fluorescent layer of the IP 40 responsive to the output from the position sensor 126. When the X-ray button is pushed by an operator, the carriage 98 containing the unexposed IP 40 held by the band loops 66a and 66b is moved laterally to the exposure station in alignment with the X-ray source 22 for a radiograph. After completion of the radiograph, the carriage 98 is moved back to the park position so that the exposed IP 40 is fed to the receiving system 38 through the second band portion 62 of the transport system 34. The exposed IP 40 is forwarded by the second band portion 62 of the transport system and turned downside up by passing through the end arc portion 210 defined by arcuate plate portion 208 in the transport channel. The exposed IP 40 is fed from the transport system 34 to the ejector roller unit 84 through the feeding mechanism including the drive-belt 76 and the follower roller 82 whereby the side opposite to the fluorescent layer side of the IP 40 faces upward when passing through the ejector roll unit 84. The ejector roller unit 84 feeds the exposed IP 40 into the receiving magazine 80 and the IP 40 discharged from the roll unit 84 is pushed by the press pad 86 on the entire surface area thereof. Thereby the exposed IP 40 which is discharged by the ejector roller unit 84 is placed on the top of the stack of the exposed IPs 40 in such manner that the side opposite to the fluorescent layer of IP 40 faces upward in the receiving magazine 80.

When a predetermined number of exposed IPs 40 have been loaded in the receiving magazine 80, the shutter 234 is inserted into the light-tight enclosure of the magazine 80 to maintain a light-tight environment surrounding the stack of the exposed IPs 40. The magazine 80 in which the light-tight environment is kept is removed from the housing structure of the spot shot apparatus 26 for processing the exposed IPs 40 to reproduce the visible images from the radiation pattern stored on the fluorescent layer of the IPs 40 by impinging a stimulable ray thereagainst by suitable means.

## Claims

1. Radiographic apparatus comprising a supply magazine (42) adapted to contain a stack of stimulable phosphor sheets (40); a transport system (34) for transporting the sheets (40) serially from the supply magazine (42) to an exposure position (10) and then to a receiving magazine (80); take-up and feeding means (44) including suction means (46, 48) for taking up the sheets (40) one at a time from the supply magazine (42); and a sheet advance means (52) for feeding the taken-up sheets (40) to the transport system (34) and characterised in that corrugation means (150, 177) acts in combination with the take-up means and feeding means (44) to corrugate the taken-up sheets (40).

2. Apparatus as claimed in claim 1, characterised in that the corrugation means is incorporated with the suction means (46, 48) and comprises a plurality of suction nozzles, one of the nozzles (152) having a longer length than the other nozzles (142, 144, 146, 148) so that, when the sheet (40) is contacted by the nozzles (142 to 152), the sheet (40) is caused to corrugate.

3. Appparatus as claimed in claim 2, characterised in that three of the nozzles (142, 144, 152) are arranged side-by-side transverse to the direction of movement of the sheets (40) and the middle nozzle (152) has a length which can be made longer than the length of the other nozzles (142, 144) so that the part of the sheet (40) contacted by the middle nozzle (152) is not in the same plane as the parts of the sheet (40) contacted by the other two nozzles (142, 144).

4. Apparatus as claimed in claim 1, characterised in that the sheet advance means (52) comprises at least two pairs of rolls (174, 176) arranged to clamp the sheet between them and the corrugation means comprises a corrugation roll (177) mounted between first rolls (174) of adjacent pairs mounted on a common axle to corrugate said sheets (40) in combination with said paired rolls (174).

5. Apparatus as claimed in claim 4, characterised in that said corrugation roll (177) has a diameter greater than the diameters of said adjacent rolls (174).

6. Apparatus according to one of claim 4 or claim 5, characterised in that the corrugation roll (177) contacts the sheet (40) on the side opposite the phosphor coating.

7. Apparatus as claimed in any one of claims 1 to 3, characterised in that the vacuum suction means (15) is movable from a taking-up position above the supply magazine (42) to a position where the sheet (40) contacts said sheet advance means (52).

8. Apparatus as claimed in claim 1, characterised in that the corrugation means comprises a protruding part contacting the side of the sheet (40) opposite the phosphor layer side to corrugate said sheet (40).

## Patentansprüche

1. Röntgenapparat mit einem Versorgungsmagazin (42) zur Aufnahme eines Stapels von anregbaren Leuchtstoffbögen (40); einem Transportsystem (34) zum Transportieren der Bögen (40) nacheinander aus dem Versorgungsmagazin (42) zu einer Belichtungsposition (10) und dann zu einem Empfangsmagazin (80); eine Aufnahme- und Zuführeinrichtung (44), die eine Saugeinrichtung (46, 48) aufweist zur Aufnahme der Bögen (40), einen Bogen zur Zeit, aus dem Versorgungsmagazin (42); und einer Bogenvorschubeinrichtung (52) zum Zuführen der aufgenommenen Bögen (40) zu dem Transportsystem (34), dadurch gekennzeichnet, daß eine Welleinrichtung (150, 177) zum Wellen der aufgenommenen Bögen (40) in Kombination mit der Aufnahmeeinrichtung und der Zuführeinrichtung (44) vorgesehen ist.

2. Apparat nach Anspruch 1, dadurch gekennzeichnet, daß die Welleinrichtung in die Saugeinrichtung (46, 48) eingebaut ist und eine Vielzahl von Saugdüsen aufweist, von denen eine Düse (152) länger ist als die anderen Düsen (142, 144, 146, 148), so daß der Bogen (40) gewellt wird, sobald der Bogen (40) von den Düsen (142—152) berührt wird.

3. Apparat nach Anspruch 2, dadurch gekennzeichnet, daß drei der Düsen (142, 144, 152) nebeneinander guer zur Bewegungsrichtung der Bögen (40) angeordnet sind und daß die mittlere Düse (152) eine Länge aufweist, die größer gemacht werden kann als die Länge der anderen Düsen (142, 144), so daß der Teil des Bogens (40), der durch die mittlere Düse (152) berührt wird, sich nicht in der gleichen Ebene wie die Teile des Bogens (40) befinden, die durch die anderen zwei Düsen (142, 144) berührt werden.

4. Apparat nach Anspruch 1, dadurch gekennzeichnet, daß die Bogenvorschubeinrichtung (52) wenigstens zwei Rollenpaare (174, 176) aufweist, zwischen denen der Bogen einklemmbar ist, und daß die Welleinrichtung eine Wellrolle (177) aufweist, die zwischen den Rollen des ersten Rollenpaares (174) auf einer gemeinsamen Welle angeordnet ist, um die Bögen (40) in Kombination mit dem Rollenpaar (174) zu wellen.

5. Apparat nach Anspruch 4, dadurch gekennzeichnet, daß die Wellrolle (177) einen Durchmesser aufweist, der größer ist als der Durchmesser der benachbarten Rollen (174).

6. Apparat nach Anspruch 4 oder 5, dadurch gekennzeichnet, daß die Wellrolle (177) den Bogen (40) auf einer der Leuchtstoffbeschichtung gegenüberliegenden Seite berührt.

7. Apparat nach einem der Ansprüche 1 bis 3, dadurch gekennzeichnet, daß die Vakuumsaugeinrichtung (15) aus einer Aufnahmeposition oberhalb des Versorgungsmagazins (42) in eine Position bewegbar ist, in der der Bogen (40) die Bogenvorschubeinrichtung (52) berührt.

8. Apparat nach Anspruch 1, dadurch gekennzeichnet, daß die Welleinrichtung ein hervorstehendes Teil aufweist, das die Seite des Bogens (40) berührt, die der Leuchtstoffschichtseite gegenüber liegt, um den Bogen (40) zu wellen.

## Revendications

1. Appareil de radiographie qui comprend un magasin d'alimentation (42) adapté à contenir une pile de feuilles de phosphore stimulables (40); un système de transport (34) pour transporter les feuilles (40) à la file du magasin d'alimentation (42) à une station d'exposition (10) et, de là, à un magasin de réception (80); des moyens de préhension et d'alimentation (44) incluant des moyens d'aspiration (46, 48) pour enlever les feuilles une à une du magasin d'alimentation (42); et un moyen d'avancement (52) pour délivrer les feuilles (40) au dispositif de transport, caractérisé en ce que des moyens de cambrage (150, 177) ou d'ondulation coopèrent avec les moyens d'enlèvement et d'alimentation (44) pour courber ou cambrer les feuilles (40) enlevées.

2. Appareil de radiographie selon la revendication 1, caractérisé en ce que les moyens de cambrage sont incorporés aux moyens d'aspiration (46, 48) et comprennent un certain nombre de buses d'aspiration ou de ventouses dont l'une (152) est plus longue que les autres (142, 144, 146, 148) de sorte que quand la feuille (40) vient au contact des ventouses (142 à 152) ladite feuille (40) est obligée de se courber.

3. Appareil de radiographie selon la revendication 2, caractérisé en ce que trois des ventouses (142, 144, 152) sont disposées côte à côte perpendiculairement à la direction du mouvement des feuilles (40), et en ce que la ventouse centrale (152) a une longueur qui peut être supérieure à celle des autres ventouses (142, 144) de sorte que la partie de la feuille (40) qui est au contact de la ventouse centrale (152) ne reste pas dans le même plan que ses autres parties qui sont au contact des deux autres ventouses (142, 144).

4. Appareil selon la revendication 1, caractérisé en ce que les moyens d'avancement de la feuille (52) comprennent, au moins, deux paires de rouleaux ou de galets (174, 176) arrangés pour serrer la feuille entre eux, tandis que les moyens de cambrage comprennent un rouleau (177) monté entre les premiers rouleaux ou galets (174) de paires adjacentes montées sur un axe commun afin de courber lesdites feuilles (40) en association avec lesdites paires de rouleaux ou galets (174).

5. Appareil selon la revendication 4, caractérisé en ce que ledit rouleau ou galet de cambrage (177) a une diamètre plus grand que celui desdits rouleaux ou galets adjacents (174).

6. Appareil selon l'une quelconque des revendications 4 ou 5, caractérisé en ce que le rouleau ou le galet de cambrage (177) s'applique contre la face de la feuille (40) opposée à celle comportant la couche de phosphore.

7. Appareil selon l'une quelconque des revendications 1 à 3, caractérisé en ce que lesdits moyens d'aspiration (15) peuvent se déplacer entre une position d'enlèvement située au-dessus du magasin d'alimentation (42) à une position où la feuille contacte lesdits moyens d'avancement (52).

8. Appareil selon la revendication 1, caractérisé en ce que les moyens de cambrage comprennent une partie saillante venant s'appliquer contre le côté de la feuille opposé à celui comportant la couche de phosphore pour courber ou cambrer ladite feuille (40).

Fig.I.

FIG.3.

1

FIG. 2.

FIG.4.

FIG. 5a.

FIG. 5b.

FIG.6a.

FIG.6b.

FIG.6c.

FIG.7.